# EUROPÄISCHE PATENTANMELDUNG

(11) **EP 3 441 726 A1**
(43) Veröffentlichungstag der Anmeldung: **13.02.2019**
(21) Anmeldenummer: 17185140.5
(22) Anmeldetag: 07.08.2017
(51) Int. Cl.: G01F 1/66

(54) **VERFAHREN ZUR LÖSBAREN BEFESTIGUNG VON CLAMP-ON-ULTRASCHALL-DURCHFLUSS-SENSOREN UND ANKLEMMVORRICHTUNG HIERZU SOWIE EINE SPANNEINHEIT**

(71) Anmelder: FLEXIM FLEXIBLE INDUSTRIEMESSTECHNIK GMBH, 12681 Berlin (DE)
(72) Erfinder: Scharnitzky, Dipl.-Ing. Jan Frederik, 10999 Berlin (DE)
(74) Vertreter: Garrels, Sabine

(57) **Zusammenfassung**

Die Erfindung betrifft ein Verfahren und eine Anklemmvorrichtung zur Anklemmung von Clamp-On-Ultraschall-Durchfluss- Sensoren sowie eine Spanneinheit. Die Erfindung liegt auf dem technischen Gebiet der Ultraschalldurchflussmesstechnik.

Aufgabe der Erfindung ist es, eine möglichst sicherere und einfach montierbare Anklemmvorrichtung und ein Verfahren zur Montage der Anklemmvorrichtung für eine Clamp-On-Ultraschall-Durchflussmessung mit definierter und konstanter Sensoranpresskraft zu entwickeln. Hierbei soll auch eine exakt fluchtende Ausrichtung der Clamp-On-Ultraschall-Durchfluss-Sensoren im Direktmodus ermöglicht sein.

Die Aufgabe wird durch ein Verfahren zur lösbaren Montage von Clamp-On-Ultraschall-Durchfluss-Sensoren an einem Prozessrohr gelöst.

Die Aufgabe wird auch gelöst durch eine Anklemmvorrichtung, welche mindestens ein Paar Befestigungselemente umfasst, welche gegenüberliegend durch eine Spanneinheit am Prozessrohr befestigt sind. Erfindungsgemäß ist mindestens ein Spannmittel mit einem Spannelement eines ersten Befestigungselementes wirkverbunden, indem das mindestens eine Spannmittel an dem Spannelement derart montiert ist, dass die Spanneinheit zwei gleichlange freie Enden des Spannmittels aufweist, welche an einem zweiten Befestigungselement anbringbar sind.

Die Aufgabe wird auch gelöst durch eine erfindungsgemäße Spanneinheit.

## Beschreibung

Die Erfindung betrifft ein Verfahren zur Anklemmung von Clamp-On-Ultraschall-Durchfluss- Sensoren und eine Anklemmvorrichtung hierzu sowie eine neue Spanneinheit. Die Erfindung liegt auf dem technischen Gebiet der Ultraschalldurchflussmesstechnik.

Ein Paar Clamp-On-Ultraschall- Durchfluss- Sensoren wird außen auf eine Rohrleitung aufgesetzt. Mittels eines Messumformers wird abwechselnd in beiden Sensoren ein Ultraschallimpuls erzeugt und nach dem Durchlaufen von Rohrwand und Medium im Rohr vom jeweils anderen Sensor empfangen. Über die gemessene Laufzeitdifferenz (mit bzw. gegen die Strömung des Mediums), die Rohrparameter und das Strömungsprofil wird im Messumformer die Durchflussmenge berechnet.

Voraussetzung für diese Messungen ist eine sichere Übertragung der Ultraschallimpulse vom Clamp-On-Ultraschall-Durchfluss- Sensor in die Rohrwand. Dies wird durch ein geeignetes Koppelmittel, die fluchtende Ausrichtung der Sensoren entlang der Rohrachse zueinander und durch die Anpressung der Sensoren auf die Rohrwand erreicht. Die Ausrichtung der Sensoren und die Anpressung sind Aufgaben einer Messkopfanklemmung.

Die Clamp-On-Ultraschall-Durchfluss- Sensoren werden derzeit meist mittels schienenartigen Befestigungssystemen montiert, wobei diese mit metallischen Spannbändern oder Ketten am Rohr befestigt werden.

Neben den schienenartigen Systemen für die Aufnahme eines oder mehrerer Clamp-On-Ultraschall-Durchfluss- Sensor-Paare gibt es auch Befestigungssysteme mit Aufnehmern für die Aufnahme eines einzelnen Clamp-On-Ultraschall-Durchfluss- Sensors. Die Clamp-On-Ultraschall-Durchfluss- Sensoren werden durch die Befestigungssysteme positioniert und in den meisten Fällen werden die Sensoren mittels Federelementen elastisch an die Rohrwand angepresst.

Es ist eine Vielzahl von Anklemmvorrichtungen verschiedener Hersteller auf dem Markt vertreten. Diese werden mit um die Prozessrohre geschlungenen Spannmitteln befestigt. Ausgereifte Anklemmvorrichtungen ermöglichen es, die Sensoren mit einer definierten Anpresskraft zu befestigen, wobei die Anpresskraft hierbei unabhängig vom Wissen des Anwenders erreicht wird. Diese Anklemmvorrichtungen gibt es sowohl als dauerhaft montierbare, als auch als portable kurzzeitig montierbare Anklemmvorrichtungen.

Es sind beispielsweise Messkopfanklemmungen für Clamp-On-Ultraschall-Durchflussmessgeräte bekannt, die eine definierte Anpresskraft garantieren. Die Messkopfanklemmungen sind für die Festinstallation konstruiert und bieten eine kontinuierliche, gleichbleibende Anpressung der Clamp-On-Ultraschall-Durchfluss- Sensoren auf das Rohr.

Insbesondere die Messungen von Gasen stellt eine erhöhte Anforderung an eine ausreichend große Anpresskraft, da hierbei Dämpfungselemente an den Rohrwänden montiert werden, um Störschall in der Rohrwand zu minimieren. Um trotz dieser Dämpfungselemente eine ausreichend gute Signaleinkopplung zu erreichen, ist hierbei ein ausreichend hoher Anpressdruck der Clamp-On-Ultraschall-Durchfluss- Sensoren ans Rohr besonders wichtig.

Die meisten vorhandenen Lösungen erfüllen nicht die Forderung nach einer definierten Anpresskraft, die unabhängig vom Wissen und Geschick des Anwenders erreicht wird. Befestigt der Anwender beispielsweise die Messkopfanklemmung mit zu geringer Anpresskraft, erfolgt eine schlechte bis nicht ausreichende Ankopplung der Clamp-On-Ultraschall-Durchfluss-Sensoren an das Rohr und es resultiert daraus keine gute Signaleinkopplung. Oder die Messkopfanklemmung wird mit einer zu großen Anpresskraft befestigt, woraus eine zu große Belastung für die verwendeten Bauteile resultiert.

Soll eine definierte Anpresskraft und gleichzeitig eine gute Zentrierung entlang der Rohrlängsachse realisiert werden, steht man vor dem Problem, dass bei einer prismatischen Zentrierung der Clamp-On-Ultraschall-Durchfluss- Sensoren der Abstand von Rohrscheitelpunkt zu einem Fixpunkt der Anklemmung mit dem Rohrdurchmesser variiert. Bei Anwendung von Federn mit ausreichend großer Federkraft variiert die Federkraft auch bei kleinen Änderungen des Federwegs signifikant.

Bestehende Systeme lösen dieses Problem durch einen zusätzlichen Arbeitsschritt und zusätzliche Bauteile oder durch mehr oder weniger komplexe Mechanik und ebenfalls zusätzliche Bauteile. Die Komplexität in Bedienung und Aufbau, sowie die Kosten stellen folglich die größten Nachteile der bestehenden Systeme dar.

In der Veröffentlichung DE 2007026842 A1 wird eine einfache Art der Befestigung einer Vorrichtung zur Bestimmung/Aufnahme von Messgrößen vorgestellt. Die Befestigungseinheit der Vorrichtung ist dabei ein "Schnappband", welches seinen Zustand bei Krafteinwirkung derart ändert, dass das zunächst ebene Schnappband sich krümmt, um sich dabei um das Prozessrohr zu legen.

In der Veröffentlichung CH 635676 A wird eine Vorrichtung vorgestellt, mit welcher ein Schall- oder Ultraschallwandler unter Erzielung eines definierten Anpressdrucks außenwandig an einem Behälter befestigt werden kann, um dessen Füllstand anzuzeigen. Der Wandler ist über eine erste Feder in einem Halter axial verschiebbar. Der Halter wird mittels eines Spannbandes und mindestens einer Spannvorrichtung, welche eine Spannung des Spannbandes bestimmende zweite Feder enthält, an dem Behälter befestigt.

In der Patentschrift DE 102014109772 B3 wird eine Messkopfanklemmung für Clamp-On-Ultraschall-Durchfluss-Sensoren mit einem Führungselement für die Aufnahme von mindestens einem Sensor-Schutzgehäuse für mindestens einen Sensor und für mindestens eine mit dem Führungselement verbundene Spanneinheit und für ein damit verbundenes Spannmittel zur lösbaren Befestigung des Führungselements am Prozessrohr offenbart. Das Führungselement ist mit mindestens einer Vorrichtung zum Zentrieren und Festklemmen desselben auf dem Prozessrohr kraft- und/oder formschlüssig verbunden, so dass das Führungselement parallel und mit einem definierten Abstand zum Scheitelpunkt des Prozessrohrs unabhängig vom Rohrdurchmesser ausgerichtet und befestigt werden kann. Die Messkopfanklemmung erfolgt hier mit einer unabhängig vom Anwender erreichbaren definierten Anpresskraft. Dies erlaubt das werkzeuglose gleichzeitige Spannen des Spannmittels, Zentrieren der Anklemmung und Bereitstellen einer zum Rohrscheitel definierten Schnittstelle. In einem zweiten Schritt wird der Anklemmungsdeckel samt Sensoren ebenfalls werkzeuglos montiert und die Sensoren werden mit definierter Anpresskraft angekoppelt.

In DE 102008034411 A1 wird ein Verfahren und ein Messsystem zur Bestimmung und/oder Überwachung des Durchflusses eines Messmediums durch ein Prozessrohr mit mindestens zwei Clamp-On-Ultraschall-Durchfluss-Sensoren beschrieben. Dazu weist das Messsystem einen Halter für einen Clamp-On-Ultraschall-Durchfluss-Sensor auf, der am Prozessrohr über einen Befestigungsmechanismus lösbar befestigbar ist. Ein Gehäuse mit den Sensoren bildet eine am Sensorhalter befestigbare und vom Sensorhalter lösbare Einheit. Die Sensoren werden bei der Montage des Gehäuses an dem Sensorhalter mit einer vorgebbaren Kraft auf das Prozessrohr gedrückt. Ein Befestigungsblech, als Teil des Sensorhalters, weist eine prismatische Ausbuchtung auf der dem Prozessrohr zugewandten Seite auf, welche als Biegung des Befestigungsblechs herstellbar ist. Das Befestigungsblech wird an seinem vorderen und hinteren Ende mittels U-Bügel oder Spannbänder direkt am Prozessrohr befestigt.

In der Patentschrift DE 102005051336 B4 wird ein Verfahren zur Befestigung eines Clamp-On-Ultraschalldurchflussmessgerätes an einem Prozessrohr offenbart, wobei Befestigungsbänder versehen mit Aussparungen um das Prozessrohr gelegt werden und mittels einer Rastereinrichtung fixiert werden. Eine Haltevorrichtung mit den Clamp-On-Ultraschall-Durchfluss-Sensoren wird an den Befestigungsbändern ausgerichtet und fixiert. Dabei werden auch die Befestigungsbänder gespannt, so dass ein Verrutschen des Clamp-On-Ultraschalldurchflussmessgerätes nicht möglich ist. Das Spannen der Befestigungsbänder erfolgt durch ein zu mindestens abschnittsweises Anheben der Befestigungsbänder.

### Darstellung der Erfindung

Aufgabe der Erfindung ist es, eine möglichst sicherere und einfach montierbare Anklemmvorrichtung und ein Verfahren zur Montage der Anklemmvorrichtung für eine Clamp-On-Ultraschall-Durchflussmessung mit definierter und konstanter Sensoranpresskraft zu entwickeln. Hierbei soll auch eine exakt fluchtende Ausrichtung der Clamp-On-Ultraschall-Durchfluss-Sensoren im Direktmodus ermöglicht sein.

Die Aufgabe wird durch ein Verfahren zur lösbaren Montage von Clamp-On-Ultraschall-Durchfluss-Sensoren an einem Prozessrohr mit den folgenden Verfahrensschritten gelöst:
a) Montage von Clamp-On-Ultraschall-Durchfluss-Sensoren an Schienenelementen und Montage der Schienenelemente an einem Paar Befestigungselemente in einer gewünschten Messanordnung,
b) Montage einer Spanneinheit durch Anbringen mindestens eines Spannmittels an einem Spannelement eines ersten Befestigungselementes derart, dass das mindestens eine Spannmittel mit dem Spannelement in Wirkverbindung steht und dass die Spanneinheit mindestens zwei gleichlange freie Enden aufweist,
c) Legen der gleichlangen freien Enden des mindestens einen Spannmittels um das Prozessrohr herum und Befestigen der gleichlangen freien Enden an einem zweiten Befestigungselement,
d) Betätigen des Spannelementes, um die gleichlangen freien Enden, welche an dem zweiten Befestigungselement befestigt sind, gleichzeitig und um einen gleichen Längenbetrag zu spannen, wodurch sich die Clamp-On-Ultraschall-Durchfluss-Sensoren und die Schienenelemente, welche an den Befestigungselementen über Drehgelenke angeordnet sind, tangential zur Außenwand des Prozessrohres ausrichten und an die Außenwand des Prozessrohres gepresst werden,
e) Wiederholen der Verfahrensschritte b) bis d) für weitere an den Befestigungselementen angeordnete Spanneinheiten.

Das Spannelement wird mittels eines Betätigungselementes, beispielsweise einem Spannhebel, welches mit dem Spannelement in Wirkverbindung steht, betätigt.

Die Montage der Clamp-On-Ultraschall-Durchfluss-Sensoren an den Schienenelementen sowie die Montage der Schienenelemente an die Befestigungselemente kann sowohl vor der Montage der Befestigungselemente als auch nach der Montage der Befestigungselemente erfolgen. Somit ist es denkbar, dass der Verfahrensschritt a) auch nach dem Verfahrensschritt d) erfolgen kann.

Die Aufgabe wird auch gelöst durch eine Anklemmvorrichtung zur lösbaren Befestigung von Clamp-On-Ultraschall-Durchfluss-Sensoren an einem Prozessrohr. Die Anklemmvorrichtung umfasst mindestens ein Paar Befestigungselemente, welche gegenüberliegend durch eine Spanneinheit am Prozessrohr befestigt sind. Erfindungsgemäß ist mindestens ein Spannmittel mit einem Spannelement eines ersten Befestigungselementes wirkverbunden, indem das mindestens eine Spannmittel an dem Spannelement derart montiert ist, dass die Spanneinheit zwei gleichlange freie Enden des Spannmittels aufweist, welche an einem zweiten Befestigungselement anbringbar sind. Bevorzugt wird nur ein Spannmittel verwendet, welches exakt mittig an dem Spannelement angebracht ist, so dass die die freien Enden gleich lang sind. Es ist aber auch denkbar, dass zwei gleichlange Spannmittel verwendet werden. Aufgrund der identischen Längen beider freien Enden der Spannmittel der Spanneinheit erfolgt eine Zwangsausrichtung beider Befestigungselemente mit einem Versatz von 180° um das Rohr. Eine exakt fluchtende Montage der Clamp-On-Ultraschall-Durchfluss-Sensoren ist somit prinzipiell gewährleistet.

Die Schienenelemente zur Aufnahme der Clamp-On-Ultraschall-Durchfluss- Sensoren sind an den Befestigungselementen über mindestens ein Drehgelenk angeordnet, so dass die Schienenelemente mit den darin montierten Clamp-On-Ultraschall-Durchfluss-Sensoren bei einer Montage der Befestigungselemente tangential zum Prozessrohr ausrichtbar sind.

Die Befestigungselemente weisen Kontaktelemente auf, mit welchen eine Zentrierung an verschiedene Prozessrohre mit unterschiedlichen Durchmessern erfolgt. Bevorzugt erfolgt die Zentrierung über zylindrische Kontaktelemente zwischen Rohr und Befestigungselement. Um verschiedene Rohrdurchmesser abdecken zu können gibt es zwei Paare dieser zylindrischen Kontaktstellen. Ein Paar für einen Bereich kleiner Nennweiten und ein weiteres Paar Auflageflächen für einen Bereich von Nennweiten die oberhalb des ersten Bereichs liegen. Alternativ können die Befestigungselemente auch in mehreren Größen hergestellt werden, um genauer an Nennweitenbereiche angepasst werden zu können. Die Abgrenzung der jeweiligen Nennweitenbereiche erfolgt über Beabstandung der Paare der zylindrischen Kontakstellen. Prinzipiell können auch alle Nennweiten mit dem gleichen Paar zylindrischen Kontakstellen zentriert werden, dann wird der Winkel zwischen den optional mehrfachen Messebenen allerdings mit zunehmendem Rohrdurchmesser sehr klein.

In den Schienenelementen sind Kraftspeicher angeordnet, um eine definierte Anpresskraft auf die Clamp-On-Ultraschall-Durchfluss- Sensoren sicher zu stellen.

Die Aufgabe wird auch gelöst durch eine Spanneinheit, welche ein Spannelement und mindestens ein Spannmittel umfasst, wobei das mindestens eine Spannmittel mit dem Spannelement wirkverbunden ist und die Spanneinheit zwei gleichlange freie Enden des mindestens Spannmittels aufweist. Hierbei ist es denkbar, dass nur ein Spannmittel verwendet wird, welches exakt mittig an dem Spannelement angebracht ist, so dass die die freien Enden gleich lang sind. Es ist aber auch denkbar, dass zwei gleichlange Spannmittel verwendet werden.

Das Spannelement ist in einem Ausführungsbeispiel ein Bolzen mit einem Schlitz, wobei in den Schlitz das mindestens eine Spannmittel hineingelegt werden kann. Der Bolzen wird durch das Betätigen eines Spannhebels gedreht, dadurch werden auch die gleichlangen freien Enden des mindestens einen Spannmittels auf den Bolzen aufgewickelt und dadurch gleichmäßig um den gleichen Längenbetrag gekürzt. Weitere Ausführungsformen des Spannelementes sind denkbar.

Das mindestens eine Spannmittel kann ein Band, ein Metallband, ein Seil oder eine Kette sein, weitere Ausführungsformen sind denkbar.

Das wesentlich Neue der erfindungsgemäßen Anklemmvorrichtung ist die Befestigung der Clamp-On-Ultraschall-Durchfluss-Sensoren am Prozessrohr mit mindestens einem Paar Befestigungselementen bei gleichzeitiger Zentrierung, exakt gegenüberliegender Ausrichtung und einer definierten Anpresskraft der Sensoren nur mit dem Spannmittel und einem Betätigungselement mit je einem Paar Befestigungselementen.

Vorteile sind die einfache Handhabung, die sichere gegenüberliegende Ausrichtung der Clamp-On-Ultraschall-Durchfluss-Sensoren mit definierter und konstanter Anpresskraft und die Option ein kompaktes System aus nur einer Baugruppe zu erstellen.

### Ausführung der Erfindung

Die Erfindung wird anhand von Zeichnungen näher erläutert. Hierzu zeigen
- Figur 1: ein Gesamtsystem montiert an einem Prozessrohr mit größerem Durchmesser (DN400),
- Figur 2: ein Gesamtsystem montiert an einem Prozessrohr mit kleinerem Durchmesser (DN100),
- Figur 3: einen Querschnitt des Gesamtsystems montiert an einem, Prozessrohr mit größerem Durchmesser (DN400),
- Figur 4: einen Querschnitt des Gesamtsystems montiert an einem Prozessrohr mit kleinerem Durchmesser (DN100),
- Figur 5: eine Spanneinheit und
- Figur 6: einen Kraftspeicher.

Die Erfindung basiert auf einem Paar Befestigungselemente 1 in welches eine Messanordnung durch montierte Schienenelemente 2, mindestens ein und maximal sechs, zur Aufnahme von Clamp-On-Ultraschall-Durchfluss- Sensoren 3, angeordnet ist. Mittels einer Spanneinheit 4 werden die Befestigungselemente 1 am Prozessrohr 5 befestigt. Die Befestigungselemente 1 stellen eine Schnittstelle zwischen der Messanordnung und der Spanneinheit 4 dar.

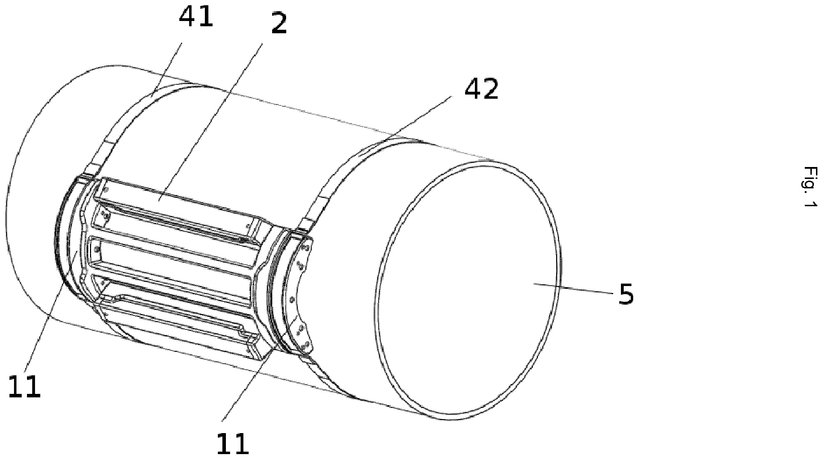

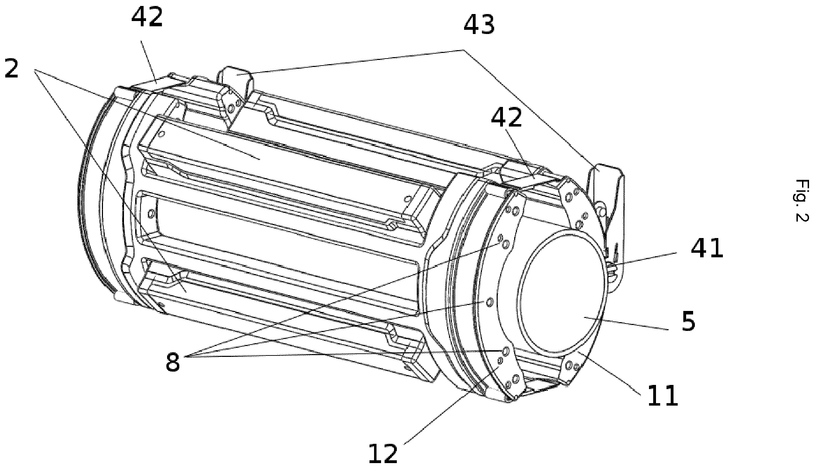

In Figur 1 ist eine dreidimensionale Ansicht einer montierten Vorrichtung zur Clamp-On-Ultraschalldurchflussmessung der erfindungsgemäßen Anklemmvorrichtung an einem Prozessrohr mit größerem Durchmesser (DN400) dargestellt und in Figur 2 ist eine dreidimensionale Ansicht einer montierten Vorrichtung zur Clamp-On-Ultraschalldurchflussmessung der erfindungsgemäßen Anklemmvorrichtung an einem Prozessrohr mit kleinerem Durchmesser (DN100) dargestellt. In einer gewünschten Messanordnung sind die Schienenelemente 2 (hier insgesamt vier Schienen 2 dargestellt) mit den darin montierten Clamp-Ultraschall-Durchfluss- Sensoren 3 an den Befestigungselementen 1 montiert. Die Messanordnung kann vor oder nach erfolgter Installation der Befestigungselemente 1 montiert und/oder geändert werden. Es stehen insgesamt drei unterschiedliche Messebenen 7 zur Verfügung, wobei die jeweils diagonal gegenüberliegenden Schienen 2 eine Messebene 7 bilden. Eine Zentrierung der Messanordnung am Prozessrohr 5 erfolgt hierbei über zylindrische Kontaktelemente 6 zwischen dem Prozessrohr 5 und den Befestigungselementen 1. Um verschiedene Rohrdurchmesser abdecken zu können gibt es verschiedene Paare dieser zylindrischen Kontaktelemente 6, zum Beispiel ein Paar Kontaktelemente 6 für einen Bereich kleinerer Nennweiten und ein Paar Kontaktelemente 6 für einen Bereich von Nennweiten die oberhalb des ersten Bereichs liegen. Alternativ kann das Befestigungselement 1 auch in mehreren Größen hergestellt werden, um genauer an verschiedene Nennweitenbereiche angepasst werden zu können. Die Abgrenzung der jeweiligen Nennweitenbereiche erfolgt über den Abstand der zylindrischen Kontaktelemente 6 und ist variabel. Prinzipiell können auch alle Nennweiten mit einem einzigen Paar Kontaktelemente 6 zentriert werden. Jedoch wird der Winkel zwischen den optional mehrfachen Messebenen 7 allerdings mit zunehmendem Rohrdurchmesser sehr klein. Mit den in Figur 1 und Figur 2 dargestellten, auf den Befestigungselementen 1 angeordneten Kontaktelementen 6 können für einen Nennweitenbereich DN100-DN400 Messebenenwinkel von 90° - 40° realisiert werden.

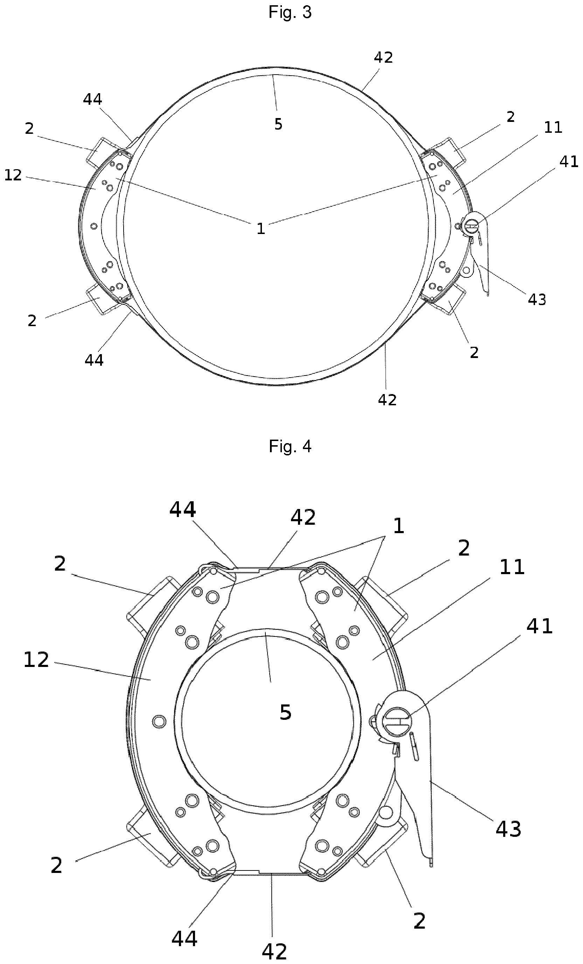

In Figur 3 und in Figur 4 ist eine Schnittansicht einer montierten Vorrichtung zur Clamp-On-Ultraschalldurchflussmessung der erfindungsgemäßen Anklemmvorrichtung an einem Prozessrohr 5 mit größerem Durchmesser (DN400) und an einem Prozessrohr mit kleinerem Durchmesser (DN100) dargestellt. Die Messanordnung beinhaltet auch in diesem Ausführungsbeispiel zwei Schienenelemente 2 auf jedem der zwei Befestigungselemente 1, welche gegenüberliegend am Prozessrohr 5 befestigt sind. Die Befestigungselemente 1 werden durch einen Einsatz von Spanneinheiten 4 am Prozessrohr 5 befestigt. Eine Spanneinheit 4 besteht aus mindestens einem Spannmittel 41, beispielsweise in Form eines Spannbandes, und einem Spannelement 42, beispielsweise in Form eines Bolzens mit einem Schlitz, welches durch ein Betätigungselement 43, beispielsweise in Form eines Spannhebels, betätigt wird. Ebenso kann das Spannmittel 41 ein Band, ein Metallband, ein Seil oder eine Kette sein.

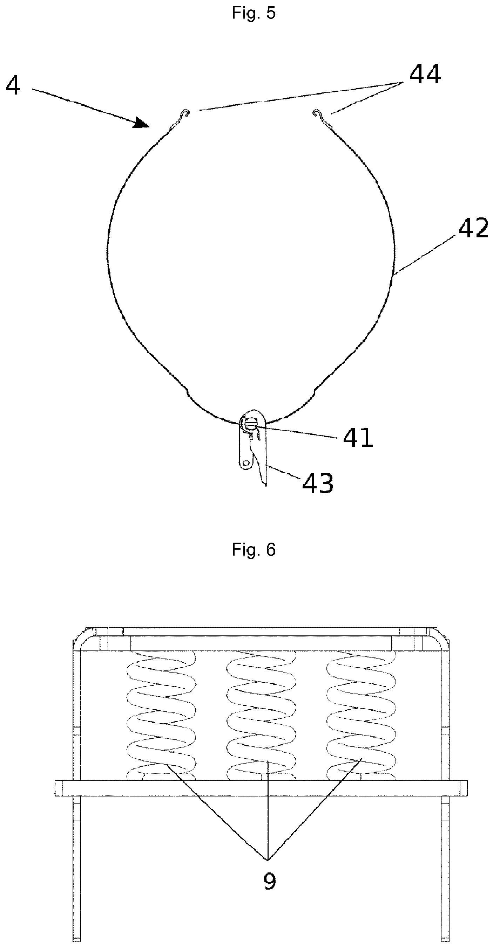

Figur 5 zeigt eine Spanneinheit 4 mit einem Spannelement 42, einem Spannmittel 41, einem Anbringungsmechanismus 44, welcher in diesem Ausführungsbeispiel in Form von Haken ausgebildet ist, und einem Betätigungselement 43. Durch den Einsatz eines Spannelements 42 und eines Spannmittels 41, welches exakt mittig im Spannelement 42 fixiert ist, erfahren die beiden gleich langen Enden des Spannmittels 41 bei Betätigung des Spannelements 42 durch das Betätigungselement 43 die gleiche Längenänderung und werden um den gleichen Betrag auf das Spannelement 42 aufgewickelt. Wird das Spannelement 42 nun gestellfest mittig in einem ersten Befestigungselement 11 montiert und die gleichlangen Enden des Spannmittels 42 an einem zweiten Befestigungselement 12 mittels des Anbringungsmechanismus 44 befestigt, werden bei Betätigung des Spannelements 42 sowohl das erste Befestigungselement 11, als auch das zweite Befestigungselement 12, gleichzeitig und gleichmäßig an das Prozessrohr 5 gezogen. Aufgrund der identischen Länge beider Enden des Spannmittels 41 erfolgt eine Zwangsausrichtung der Befestigungselemente 1 mit einem Versatz von 180° um das Prozessrohr 5, eine exakt fluchtende Montage der Clamp-On-Ultraschall-Durchfluss-Sensoren 3 ist somit prinzipiell gewährleistet. Anstatt eines Spannmittels 41, welches exakt mittig am ersten Befestigungselement 11 fixiert ist, können auch zwei gleichlange Spannmittel 41 an einem Spannelement 42 des ersten Befestigungselementes 11 befestigt sein. Bei Betätigung des Betätigungselementes 43 und damit des zum Betätigungselement 43 in Wirkbeziehung stehenden Spannelementes 42 werden die Spannmittel 41 gleichzeitig und gleichmäßig gespannt. Somit ändern sich die Längen der Spannmittel 41 jeweils um den gleichen Betrag. Sind die Schienenelemente 2 nun aber gestellfest in den Befestigungselementen 1 montiert, erfolgt die exakte Ausrichtung der Schienenelemente 2 und damit auch der Clamp-On-Ultraschall-Durchfluss-Sensoren 3 nur für einen festgelegten Rohrdurchmesser exakt senkrecht zur gewünschten Messebene durch die Rohrlängsachse. Eine ausreichend genaue Messung bei anderen Rohrdurchmessern ist somit nicht möglich. Folglich muss sichergestellt werden, dass die Schienenelemente 2 mit ihrer Längsachse während der Montage senkrecht zur Messebene 7 ausgerichtet werden. Hierzu verfügt die Erfindung über Drehgelenke 8 zwischen dem Befestigungselement 1 und dem Schienenelement 2. Ferner schließen die Schienenelemente 2 und die zylindrischen Kontaktelemente 6 tangential zueinander ab. Somit werden die Schienenelemente 2 bei der Montage des Befestigungselements 1 zwangsweise tangential zur Prozessrohroberfläche ausgerichtet und stehen folglich immer mit ihrer Längsachse senkrecht zur Messebene 7.

Um eine definierte Anpresskraft sicher zu stellen, werden in den Schienenelementen 2 entsprechende Kraftspeicher eingesetzt, wie beispielsweise in Figur 6 dargestellt. In diesem Ausführungsbeispiel wird eine aufgebrachte Kraft in Federelementen gespeichert. Die aufgebrachte Kraft wirkt senkrecht zur Rohrwand auf die Clamp-On-Ultraschall-Durchfluss-Sensoren 3. Aufgrund des tangentialen Kontakts zwischen dem Schienenelement 2 und der Prozessrohrwand stellt sich, unabhängig von der Nennweite des Prozessrohres 5, stets ein gleicher Abstand zwischen Rohrscheitelpunkt und Bezugspunkt des Schienenelements 2 ein. Somit erfahren die Kraftspeicher stets die gleiche Längenänderung und üben folglich die gleiche Kraft auf die Clamp-On-Ultraschall-Durchfluss-Sensoren 3 aus. Werksseitig voreingestellte Sensorabstände werden durch gerasterte Verbindungselemente definiert, welche reversibel mit den Clamp-On-Ultraschall-Durchfluss-Sensoren 3 verbunden sind und im Inneren der Schienenelemente 2 verborgen sind. Eine Abdichtung der Messstelle kann durch Applizieren einer Dichtung (Hohldichtschnur, Schaumdichtung, etc.) leicht an den Schienenelementen 2 realisiert werden.

### Bezugszeichenliste

1 Befestigungselemente
   11 erstes Befestigungselement
   12 zweites Befestigungselement
2 Schienenelemente mit Clamp-On-Ultraschall-Durchfluss-Sensoren
4 Spanneinheit
   41 Spannmittel
   42 Spannelement
   43 Betätigungselement
   44 Anbringungsmechanismus
5 Prozessrohr
6 Kontaktelemente
7 Messebene
8 Drehgelenk
9 Federelemente

## Patentansprüche

1. Verfahren zur lösbaren Befestigung von Clamp-On-Ultraschall-Durchfluss-Sensoren (3) an einem Prozessrohr (5) mit den folgenden Verfahrensschritten:
a) Montage von Clamp-On-Ultraschall-Durchfluss-Sensoren (3) an Schienenelementen (2) und Montage der Schienenelemente (2) an einem Paar Befestigungselemente (1),
b) Montage einer Spanneinheit (4) durch Anbringen mindestens eines Spannmittels (41) an einem Spannelement (42) eines ersten Befestigungselementes (1) derart, dass das mindestens eine Spannmittel (41) mit dem Spannelement (42) in Wirkverbindung steht und dass die Spanneinheit (4) mindestens zwei gleichlange freie Enden des mindestens einen Spannmittels (41) aufweist,
c) Legen der gleichlangen freien Enden des mindestens einen Spannmittels (41) um das Prozessrohr (5) herum und Befestigen der gleichlangen freien Enden an einem zweiten Befestigungselement (12),
d) Betätigen des Spannelementes (42), um die gleichlangen freien Enden, welche an dem zweiten Befestigungselement (12) befestigt sind, gleichzeitig und um einen gleichen Längenbetrag zu spannen, wodurch sich die Clamp-On-Ultraschall-Durchfluss-Sensoren (3) und die Schienenelemente (2), welche an den Befestigungselementen (1) über Drehgelenke (8) angeordnet sind, tangential zur Außenwand des Prozessrohres (5) ausrichten,
e) Wiederholen der Verfahrensschritte b) bis d) für weitere an den Befestigungselementen (1) angeordnete Spanneinheiten (4).

2. Verfahren nach Anspruch 1, **dadurch gekennzeichnet, dass** das Spannelement (42) mittels eines Betätigungselementes (43), welches mit dem Spannelement (42) in Wirkverbindung steht, betätigt wird.

3. Verfahren nach Anspruch 1, **dadurch gekennzeichnet, dass** Verfahrensschritt a) nach Verfahrensschritt d) erfolgt.

4. Anklemmvorrichtung zur lösbaren Befestigung von Clamp-On-Ultraschall-Durchfluss-Sensoren (3) an einem Prozessrohr (5), wobei die Anklemmvorrichtung mindestens ein Paar Befestigungselemente (1) umfasst, wobei die Befestigungselemente (1) gegenüberliegend durch eine Spanneinheit (4) am Prozessrohr (5) befestigt sind, wobei mindestens ein Spannmittel (41) mit einem Spannelement (42) eines ersten Befestigungselementes (11) in Wirkverbindung steht und derart an dem Spannelement (42) montiert ist, dass die Spanneinheit (4) zwei gleichlange freie Enden des mindestens einen Spannmittels (41) aufweist, welche an einem zweiten Befestigungselement (12) anbringbar sind.

5. Anklemmvorrichtung nach Anspruch 4, **dadurch gekennzeichnet, dass** Schienenelemente (2) zur Aufnahme der Clamp-On-Ultraschall-Durchfluss-Sensoren (3) an den Befestigungselementen (1) über mindestens ein Drehgelenk (8) angeordnet sind, so dass die Schienenelemente (2) mit den darin montierten Clamp-On-Ultraschall-Durchfluss- Sensoren (3) bei einer Montage der Befestigungselemente (1) tangential zum Prozessrohr (5) ausrichtbar sind.

6. Anklemmvorrichtung nach einem der vorhergehenden Ansprüche 4 oder 5, **dadurch gekennzeichnet, dass**
die Befestigungselemente (1) Kontaktelemente (6) aufweisen, mit welchen die Anklemmvorrichtung an unterschiedliche Prozessrohre (5) mit verschiedenen Durchmessern zentrierbar ist.

7. Anklemmvorrichtung nach einem der vorhergehenden Ansprüche 4 bis 6, **dadurch gekennzeichnet, dass**
Kraftspeicher in den Schienenelementen (2) angeordnet sind, um eine definierte Anpresskraft auf die Clamp-On-Ultraschall-Durchfluss-Sensoren (3) sicher zu stellen.

8. Spanneinheit (4), welche ein Spannelement (42) und mindestens ein Spannmittel (41) umfasst, wobei das mindestens eine Spannmittel (41) mit dem Spannelement (42) wirkverbunden ist, wobei die Spanneinheit (4) zwei gleichlange freie Enden des mindestens einen Spannmittels (41) aufweist.

9. Spanneinheit nach Anspruch 8, **dadurch gekennzeichnet, dass** das Spannelement (42) ein Bolzen mit einem Schlitz ist.

10. Spanneinheit nach Anspruch 8, **dadurch gekennzeichnet, dass** das mindestens eine Spannmittel (41) ein Band, ein Metallband, ein Seil oder eine Kette ist.
